# EUROPEAN PATENT SPECIFICATION

(11) **EP 2 073 086 B1**
(45) Date of publication and mention of the grant of the patent: **27.02.2013**
(21) Application number: 07150213.2
(22) Date of filing: 20.12.2007
(51) Int. Cl.: G05B 15/02, G06Q 10/00, G05B 19/418

(54) **Method for generating documentation for a building control system**
Verfahren zur Dokumentationserstellung für ein Gebäudesteuerungssystem
Procédé de génération de documentation pour système de commande de bâtiment

(43) Date of publication of application: 24.06.2009
(73) Proprietor: Tac AB, 213 75 Malmö (SE)
(72) Inventor: Grundelius, Mattias, 226 47 Lund (SE)
(74) Representative: Henriksson, Dan Ragnar Mikael

(56) References cited:
- WO-A-95/04314
- WO-A-2005/109122
- US-A- 5 924 109
- US-A1- 2005 289 467
- MATRIKON OPC: 'Matrikon OPC Client for Microsoft SQL', [Online] 01 January 2005, Retrieved from the Internet: <URL:http://replay.web.archive.org/20050101 041750/http://www.opcfoundation.org/Product s/ProductDetails.aspx?CM=1&RI=505&CU=1> [retrieved on 2011-05-13]

## Description

### Technical Field

The present invention relates to a method, a computer program and computer means for generating documentation for a building control system.

### Background Art

In various kinds of buildings, it is currently a common measure to control different systems, such as control systems for heating, ventilation and air conditioning (HVAC), security, lighting, asset management or other facility management control. Systems of this kind are becoming more sophisticated and complex due to computer aided control and use of communication technologies. In order to efficiently design the building control system and have an overview over the same, data representing the building system must be well structured.

US-7,164,972, for example, discloses an arrangement for coordinating data representative of a building control system, which arrangement includes a process connected to a memory. The memory stores a plurality of building space objects and at least one building automation device object. A building space object includes a reference to at least one of a group consisting of a parent building space object and a child building space object, a reference to at least one graphic file containing a graphic image representation of the building space, and a reference to information about one or more building automation devices associated with the building space object. A building automation device object includes a reference to a corresponding building space object, a reference to at least one operating value of the building automation device, and a reference to a file containing information regarding the at least one building automation device object.

Though the above document provides an arrangement for coordinating the data in a rather representative way, it is rather cumbersome to create a specification or provide documentation for the building control system.

### Summary of the Invention

In view of the foregoing, it is an object of the present invention to provide an improvement of the above techniques and prior art. More particularly, it is an object to provide a method and means for efficient generation of documentation for a building control system.

Hence a method is provided for generating documentation for a building control system represented by contents in a database, the method comprising the steps of: creating a plurality of objects that form contents in the database; assigning to each object properties representative of a building control object; assigning textual information to the objects; creating connections between the objects; and automatically generating the documentation by traversing the objects in the database and collecting data pertaining to the objects in the database, and inserting the data in a documentation object.

The inventive method is advantageous in that an efficient workflow is provided and documentation is quickly generated. Another advantage lies in the possibility of later re-use of the created objects including their textual information, which makes it possible to quickly create similar objects in the same or in another building control system.

The method may comprise the step of storing a created object in an object library database, which library database is accessible when designing another building control system, for creating an object with building control properties and textual information similar to an object selected in the library database, which provides the advantage of increased design speed.

The textual information may be associated with a text attribute, which text attribute is associated with an object, which provides a quite efficient data structure for linking textual information to an object.

At least one step of the method may include user interaction in a graphical user interface.

The method may further comprise the step of displaying, in a first part of a graphical user interface, the plurality of objects.

The method may further comprise the step of displaying, in a second part of a graphical user interface, text attributes associated with an object.

The method may further comprise the step of displaying, in a third part of a graphical user interface, references to text attributes associated with at least one object.

The method may further comprise the step of displaying, in the third part of the graphical user interface, properties representative of a building control object and assigned to an object.

The method may further comprise the step of displaying, in a fourth part of a graphical user interface, the textual information assigned to an object.

The method may further comprise the step of displaying, in a second part of a graphical user interface when an object is selected, text attributes associated with the selected object.

The method may further comprise the step of displaying, in a third part of a graphical user interface when an object is selected, text attributes associated with the selected object or text attributes associated with any other object connected to the selected object.

The method may further comprise the step of displaying in a graphical user interface when a text attribute associated with an object is selected, textual information associated with the selected text attribute.

Textual information associated with a first text attribute may comprise a reference to a second text attribute, for the purpose of including textual information of the second text attribute in the textual information of the first text attribute.

Textual information associated with a first text attribute associated with a first object may comprise properties representative of a building control object and assigned to a second object.

The step of assigning textual information to the objects may include manual text input.

The step of assigning textual information to the objects may include manually inputting references to textual information associated with an object, by using a drag-and-drop method.

The step of assigning properties to each object may include assigning at least one in port and at least one out port, for providing connections to other objects in the database.

The collecting of data pertaining to the objects in the database may include collecting the textual information assigned to the objects in the database.

At least one object may represent any of a physical component in the building control system, a software component in the building control system, and a system comprising at least two objects forming contents in the database.

According to one aspect of the invention, a computer program is provided, comprising software instructions that, when executed in a computer, perform the method according to above.

According to another aspect of the invention, computer means are provided, which are configured to execute the method described above.

Generally, all terms used in the claims are to be interpreted according to their ordinary meaning in the technical field, unless explicitly defined otherwise herein. All references to "a/an/the [object, text attribute, textual information, means, step etc.]" are to be interpreted openly as referring to at least one instance of said object, text attribute, textual information, means, step, etc., unless explicitly stated otherwise. The steps of any method disclosed herein do not have to be performed in the exact order disclosed, unless explicitly stated.

### Brief Description of the Drawings

Embodiments of the present invention will now be described, by way of example, with reference to the accompanying schematic drawings, in which
Fig. 1 is a representation of computer means which may be used for implementing the present invention,
Fig. 2 is a schematic view of a graphical user interface according to the invention, and
Fig, 3 is a flow diagram of the inventive method.

### Detailed Description of Preferred Embodiments of the Invention

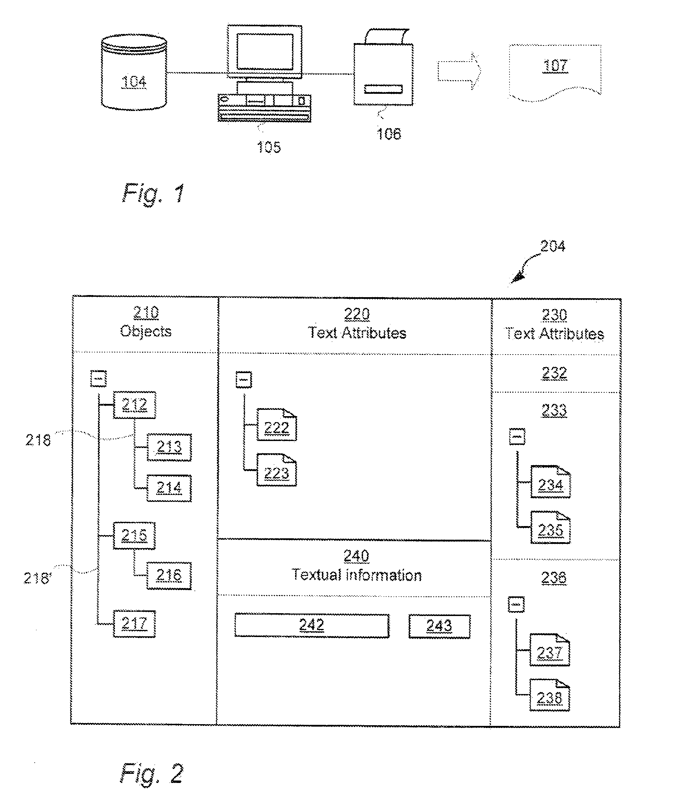

With reference to Fig. 1, necessary hardware components are illustrated and comprise a personal computer 105 which is connected to a database 104 and to a printer 106 for printing documentation 107 for a building control system. The hardware components are configured, connected and operable in a conventional manner.

Fig. 2 illustrates a graphical user interface 204 for a software program implementing the inventive method and configured to be executed on the personal computer 105. The user interface has four main subviews 210, 220, 230, 240, of which the first 210 illustrates objects 212-217 which each represent a building control object. Typical building control objects include hardware components such as different kind of sensors and actuators, but also more complex units like boilers, air conditioning units, access control readers, luminaries, energy meters and other components used in building control systems. Other building control objects may be software components such as program sections holding information about various user set points, quantities and alarm levels. The software components may also be used to control the hardware components, e.g. by sending control signals. An object may also be an object consisting of several objects, which is common for a so-called building system object such as a system for heating, security or lighting.

Each object has associated text attributes which are displayed in the second subview 220 upon selection of the object. Typical text attributes are identification parameters, different set points, object types etc. In this exemplifying embodiment, the first object 212 in the first subview 210 is selected and upon selection of this object 212, its text attributes 222, 223 are displayed in the second subview 220. Of course, any other object 213-217 may be selected in the first subview 210, in which case the text attributes of the selected objects are displayed in the second subview 220.

In the third subview 230 of the graphical user interface 204 text attributes are also displayed, such as text attributes 234, 235 for the selected object 212, which means that these attributes 234, 235 are the same as the text attributes 222, 223 in the second subview 220. Preferably the text attributes 234, 235 are displayed in a subview 233 of the third subview 230. The third subview 230 also displays text attributes 237, 238 belonging to an object 213 connected to the selected object 212, which text attributes 237, 238 preferably are displayed in a further subview 236 of the third subview 230.

In yet another subview 232 of the third subview 230, further text attributes associated with objects connected to the selected object 212 may be displayed.

Preferably, in the third subview 230 not only text attributes are displayed, but also building control properties of the selected object 212 or building control properties of objects connected to the selected object.

As an example, building control properties for e.g. a temperature sensor may be the function performed (such as air duct temperature sensing), the name of the sensor, a sensor identification parameter, manufacturer information or part number, but also properties relating to the signal from the sensor, such as the sensed unit (e.g. temperature in degrees Celsius), whether it is a digital or analog signal etc. Text attributes for the exemplified temperature sensor may include a general operation description, monitoring information, operating times, temperature set points and other settings, measure point descriptions etc.

Building control properties for a software object typically include a name and different kinds of input and output variables. Text attributes for a software object may include a general operation description, setpoint information, reference values for operating parameters and different control signals/values for a physical object the software object is configured to control.

Each text attribute may be assigned textual information which information is displayed in the fourth subview 240 upon selection of the text attribute 222 the textual information 242, 243 is assigned to. The fourth subview 240 is basically a text editor, where a user may, by means of a keyboard of the personal computer 105, insert any text of his choice that is suitable for proper documentation. The user may also select, by means of a computer mouse of the personal computer 105, a text attribute or a building control property in the third subview 230 and drag it to the text editor of the fourth subview 240. This drag-and-drop operation inserts a reference in the textual information which now displays textual information of the text attribute or building control property that was drag-and-dropped, i.e. when the reference is inserted, the textual information belonging to the inserted reference is displayed in the fourth subview 240.

Of course, since a reference is inserted in the textual information, the textual information will be automatically updated if a modification of the referred textual information is conducted.

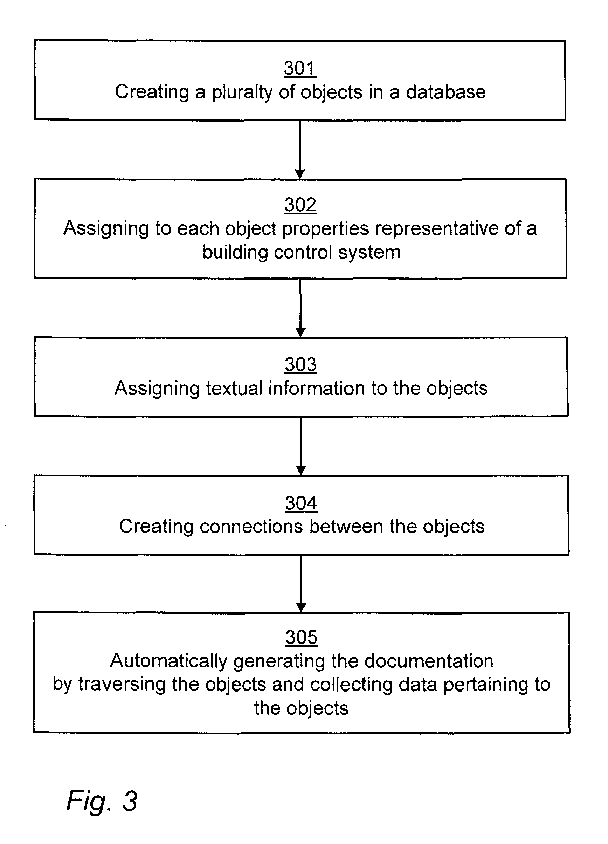

With reference to Fig. 3, the method is further described and comprises creating 301 a plurality of the objects in a database, assigning 302 to each object properties representative of the building control system, assigning 303 textual information to the objects, creating 304 connections between the objects, and automatically generating the documentation 305 by traversing the objects and collecting data pertaining to the objects.

From the above, at is clear that the object is a data structure that holds or has references to both text attributes and properties that are specific for a building control object. The text attribute may be seen as a container or pointer for text (the textual information) which consists of strings, integers, reals as well as pointers (references) to other text attributes. The data structure is generated in any way suitable for the specific object.

The layout and creation of the subviews as well as displaying and selecting objects and text attributes are per se done in any suitable, conventional manner. Preferably any conventional programming framework is used for implementing the method and the interface, such as the Microsoft.NET Framework or Microsoft Foundation Class Library. The same applies for implementing the editor and drag-and-drop function described above and for creating objects, attributes and textual information as well as for creating connections therebetween.

When on operator has created and connected the desired number of objects and inserted proper textual information, the textual information associated with each object is, via one or more textual attribute, in a suitable, known manner collected and inserted in a documentation object, which may be a common text file. Preferably not only textual information is collected, but also information concerning the connections between the objects, i.e. how an object is connected to other objects, and properties representative of the (building control) object. The collected data is inserted in the documentation object and structured in a readable form. The documentation object may, for example, be a computer file, a Microsoft Word document or any suitable printed matter.

Accordingly, by inserting proper text and creating references to other text attributes and building control properties, the documentation of the building control system is generated. Of course, it is the objects in the database that represent the building control system, and preferably the objects are stored in the database while the method is executed on the personal computer.

## Claims

1. A method for generating documentation for a building control system represented by contents in a database (104), the method comprising the steps of:
creating a plurality of objects (212-217) that form contents in the database (104),
assigning to each object (212-217) properties representative of a building control object,
assigning textual information (242, 243) to the objects (212-217),
creating connections (218, 218') between the objects (212-217), and
automatically generating the documentation by traversing the objects (212-217) in the database (104) and collecting data pertaining to the objects (212-217) in the database (104), and inserting the data in a documentation object,
**characterized in that**
the textual information (242, 243) is associated with a first text attribute (222), which first text attribute (222) is associated with an object (212) of the objects (212-217), and wherein
said textual information (242, 243) comprises a reference to a second text attribute (223; 235; 238), for the purpose of including textual information of the second text attribute (223; 235; 238) in the textual information of the first text attribute (222), and/or comprises said properties representative of the building control object assigned to a second object (213-217).

2. A method according to claim 1, wherein at least one step of the method includes user interaction in a graphical user interface (204).

3. A method according to claim 1 or 2, further comprising the step of displaying, in a first part (210) of a graphical user interface (204), the plurality of objects (212-217).

4. A method according to any one of claims 1 - 3, further comprising the step of displaying, in a second part (220) of a graphical user interface (204), text attributes (222; 223) associated with an object.

5. A method according to any one of claims 1 - 4, further comprising the step of displaying, in a third part (230) of a graphical user interface (204), references to text attributes (234, 235) associated with at least one object.

6. A method according to claim 5, further comprising the step of displaying, in the third part (230) of the graphical user interface (204), properties representative of a building control object and assigned to an object.

7. A method according to any one of claims 1 - 6, further comprising the step of displaying, in a fourth part (240) of a graphical user interface (204), the textual information (242, 243) assigned to an object (212).

8. A method according to any one of claims 1 - 7, further comprising the step of displaying, in a second part (220) of a graphical user interface (204) when an object (212) is selected, text attributes (222, 223) associated with the selected object (212).

9. A method according to any one of claims 1 - 8, further comprising the step of displaying, in a third part (230) of a graphical user interface (204) when an object (212) is selected, text attributes (234, 235) associated with the selected object (212) or text attributes (237, 238) associated with any other object (213; 214) connected to the selected object (212).

10. A method according to any one of claims 1 - 9, further comprising the step of displaying, in a graphical user interface (204) when a text attribute (222) associated with an object (212) is selected, textual information (242, 243) associated with the selected text attribute (222).

11. A method according to any one of claims 1 - 10, wherein the step of assigning textual information (242, 243) to the objects includes manual text input.

12. A method according to any one of claims 1 - 11, wherein the step of assigning textual information (242, 243) to the objects includes manually inputting references to textual information associated with an object, by using a drag-and-drop method.

13. A method according to any one of claims 1 - 12, wherein the step of assigning properties to each object (212-217) includes assigning at least one in port and at least one out port, for providing connections (218, 218') to other objects in the database (104).

14. A method according to any one of claims 1 - 13, wherein the collecting of data pertaining to the objects (212-217) in the database (104) includes collecting the textual information assigned to the objects in the database.

15. A method according to any one of the claims 1 - 14, wherein at least one object represents a physical component in the building control system.

16. A method according to any one claims 1 - 15, wherein at least one object represents a software component in the building control system.

17. A method according to any one of claims 1 - 16, wherein at least one object represents a system comprising at least two objects forming contents in the database.

18. A computer program, comprising software instructions that, when executed in a computer (105), performs a method according to any one of claims 1 - 17.

19. Computer means configured to execute a method according to any one of claims 1 - 17.

## Patentansprüche

1. Verfahren zum Generieren einer Dokumentation für ein Gebäudesteuerungssystem, das durch einen Inhalt in einer Datenbank (104) dargestellt wird, wobei das Verfahren folgende Schritte umfasst:
Erzeugen mehrerer Objekte (212-217), die einen Inhalt in der Datenbank (104) bilden,
Zuweisen von Eigenschaften, die ein Gebäudesteuerungsobjekt darstellen, zu jedem Objekt (212-217),
Zuweisen von Textinformationen (242, 243) zu den Objekten (212-217),
Erzeugen von Verbindungen (218, 218') zwischen den Objekten (212-217) und
automatisches Generieren der Dokumentation mittels Durchsuchen der Objekte (212-217) in der Datenbank (104) und Erfassen von Daten, die zu den Objekten (212-217) in der Datenbank (104) gehören, und Einfügen der Daten in ein Dokumentationsobjekt,
**dadurch gekennzeichnet, dass**
die Textinformationen (242, 243) einem ersten Textattribut (222) zugeordnet sind, wobei das erste Textattribut (222) einem Objekt (212) der Objekte (212-217) zugeordnet ist, und
wobei die Textinformationen (242, 243) einen Verweis auf ein zweites Textattribut (223; 235; 238) umfassen, um Textinformationen des zweiten Textattribute (223; 235; 238) in die Textinformationen des ersten Textattribute (222) einzubinden, und/oder die Eigenschaften umfassen, die das Gebäudesteuerungsobjekt darstellen, das einem zweiten Objekt (213-217) zugewiesen ist.

2. Verfahren nach Anspruch 1, wobei mindestens ein Schritt des Verfahrens eine Nutzerinteraktion in einer grafischen Benutzerschnittstelle (204) enthält.

3. Verfahren nach Anspruch 1 oder 2, das des Weiteren den Schritt umfasst, in einem ersten Abschnitt (210) einer grafischen Benutzerschnittstelle (204) die mehreren Objekte (212-217) anzuzeigen.

4. Verfahren nach einem der Ansprüche 1-3, das des Weiteren den Schritt umfasst, in einem zweiten Abschnitt (220) einer grafischen Benutzerschnittstelle (204) Textattribute (222; 223) anzuzeigen, die einem Objekt zugeordnet sind.

5. Verfahren nach einem der Ansprüche 1-4, das des Weiteren den Schritt umfasst, in einem dritten Abschnitt (230) einer grafischen Benutzerschnittstelle (204) Verweise auf Textattribute (234, 235) anzuzeigen, die mindestens einem Objekt zugeordnet sind.

6. Verfahren nach Anspruch 5, das des Weiteren den Schritt umfasst, in dem dritten Abschnitt (230) der grafischen Benutzerschnittstelle (204) Eigenschaften anzuzeigen, die ein Gebäudesteuerungsobjekt darstellen und einem Objekt zugewiesen sind.

7. Verfahren nach einem der Ansprüche 1-6, das des Weiteren den Schritt umfasst, in einem vierten Abschnitt (240) einer grafischen Benutzerschnittstelle (204) die Textinformationen (242, 243) anzuzeigen, die einem Objekt (212) zugewiesen sind.

8. Verfahren nach einem der Ansprüche 1-7, das des Weiteren den Schritt umfasst, in einem zweiten Abschnitt (220) einer grafischen Benutzerschnittstelle (204), wenn ein Objekt (212) ausgewählt ist, Textattribute (222, 223) anzuzeigen, die dem ausgewählten Objekt (212) zugeordnet sind.

9. Verfahren nach einem der Ansprüche 1-8, das des Weiteren den Schritt umfasst, in einem dritten Abschnitt (230) einer grafischen Benutzerschnittstelle (204), wenn einen Objekt (212) ausgewählt ist, Textattribute (234, 235) anzuzeigen, die dem ausgewählten Objekt (212) zugeordnet sind, oder Textattribute (237, 238) anzuzeigen, die irgend einem anderen Objekt (213; 214) zugeordnet sind, das mit dem ausgewählten Objekt (212) verbunden ist.

10. Verfahren nach einem der Ansprüche 1-9, das des Weiteren den Schritt umfasst, in einer grafischen Benutzerschnittstelle (204), wenn ein Textattribut (222), das einem Objekt (212) zugeordnet ist, ausgewählt wird, Textinformationen (242, 243) anzuzeigen, die dem ausgewählt Textattribut (222) zugeordnet sind.

11. Verfahren nach einem der Ansprüche 1-10, wobei der Schritt des Zuweisens von Textinformationen (242, 243) zu den Objekten eine manuelle Texteingabe enthält.

12. Verfahren nach einem der Ansprüche 1-11, wobei der Schritt des Zuweisens von Textinformationen (242, 243) zu den Objekten das manuelle Eingeben von Verweisen auf Textinformationen, die einem Objekt zugeordnet sind, mittels eines Drag-and-Drop-Verfahrens enthält.

13. Verfahren nach einem der Ansprüche 1-12, wobei der Schritt des Zuweisens von Eigenschaften zu jedem Objekt (212-217) das Zuweisen von mindestens einem Eingangsport und mindestens einem Ausgangsport zum Bereitstellen von Verbindungen (218, 218') zu anderen Objekten in der Datenbank (104) enthält.

14. Verfahren nach einem der Ansprüche 1-13, wobei das Erfassen von Daten über die Objekte (212-217) in der Datenbank (104) das Erfassen der Textinformationen, die den Objekten zugewiesen sind, in der Datenbank enthält.

15. Verfahren nach einem der Ansprüche 1-14, wobei mindestens ein Objekt eine physische Komponente in dem Gebäudesteuerungssystem darstellt.

16. Verfahren nach einem der Ansprüche 1-15, wobei mindestens ein Objekt eine Software-Komponente in dem Gebäudesteuerungssystem darstellt.

17. Verfahren nach einem der Ansprüche 1-16, wobei mindestens ein Objekt ein System darstellt, das mindestens zwei Objekte umfasst, die einen Inhalt in der Datenbank bilden.

18. Computerprogramm, das Software-Anweisungen umfasst und das, wenn es auf einem Computer (105) ausgeführt wird, ein Verfahren nach einem der Ansprüche 1-17 ausführt.

19. Computermittel, das dafür konfiguriert ist, ein Verfahren nach einem der Ansprüche 1-17 auszuführen.

## Revendications

1. Procédé de génération de documentation pour un système de commande de bâtiment représenté par des contenus dans une base de données (104), le procédé comprenant les étapes de :
la création d'une pluralité d'objets (212-217) formant des contenus dans la base de données (104),
l'affectation à chaque objet (212-217) de propriétés représentatives d'un objet de commande de bâtiment,
l'affectation d'informations textuelles (242, 243) aux objets (212-217),
la création de liaisons (218, 218') entre les objets (212-217), et
la génération automatique de la documentation en traversant les objets (212-217) dans la base de données (104) et en collectant des données concernant les objets (212-217) dans la base de données (104) et en insérant les données dans un objet de documentation,
**caractérisé en ce que**
les informations textuelles (242, 243) sont associées au premier attribut de texte (222), ledit premier attribut de texte (222) est associé à un objet (212) parmi les objets (212-217), et dans lequel
lesdites informations textuelles (242, 243) comprennent une référence à un deuxième attribut de texte (223; 235; 238), dans le but d'inclure des informations textuelles du deuxième attribut de texte (223; 235; 238) dans les informations textuelles du premier attribut de texte (222), et/ou comprennent lesdites propriétés représentatives de l'objet de commande de bâtiment affectées à un deuxième objet (212-217).

2. Procédé selon la revendication 1, dans lequel au moins une étape du procédé comprend une interaction d'utilisateur dans une interface utilisateur graphique (204).

3. Procédé selon la revendication 1 ou 2, comprenant en outre l'étape de l'affichage, dans une première partie (210) d'une interface utilisateur graphique (204), de la pluralité d'objets (212-217).

4. Procédé selon l'une quelconque des revendications 1 à 3, comprenant en outre l'étape de l'affichage, dans une deuxième partie (220) d'une interface utilisateur graphique (204), d'attributs de texte (222; 223) associés à un objet.

5. Procédé selon l'une quelconque des revendications 1 à 4, comprenant en outre l'étape de l'affichage, dans une troisième partie (230) d'une interface utilisateur graphique (204), de références à des attributs de texte (234, 235) associés à au moins un objet.

6. Procédé selon la revendication 5, comprenant en outre l'étape de l'affichage, dans la troisième partie (230) de l'interface utilisateur graphique (204), de propriétés représentatives d'un objet de commande de bâtiment et affectées à un objet.

7. Procédé selon l'une quelconque des revendications 1 à 6, comprenant en outre l'étape de l'affichage, dans une quatrième partie (240) d'une interface utilisateur graphique (204), d'informations textuelles (242, 243) affectées à un objet (212).

8. Procédé selon l'une quelconque des revendications 1 à 7, comprenant en outre l'étape de l'affichage, dans une deuxième partie (220) d'une interface utilisateur graphique (204), lorsqu'un objet (212) est sélectionné, d'attributs de texte (222, 223) associés à l'objet sélectionné (212).

9. Procédé selon l'une quelconque des revendications 1 à 8, comprenant en outre l'étape de l'affichage, dans une troisième partie (230) d'une interface utilisateur graphique (204), lorsqu'un objet (212) est sélectionné, d'attributs de texte (234, 235) associés à l'objet sélectionné (212) ou d'attributs de texte (237, 238) associés à un autre objet (213; 214) relié à l'objet sélectionné (212).

10. Procédé selon l'une quelconque des revendications 1 à 9, comprenant en outre l'étape de l'affichage, dans une interface utilisateur graphique (204), lorsqu'un attribut de texte (222) associé à un objet (212) est sélectionné, d'informations textuelles (242, 243) associées à l'attribut de texte sélectionné (222).

11. Procédé selon l'une quelconque des revendications 1 à 10, dans lequel l'étape de l'affectation d'informations textuelles (242, 243) aux objets comprend une entrée de texte manuelle.

12. Procédé selon l'une quelconque des revendications 1 à 11, dans lequel l'étape de l'affectation d'informations textuelles (242, 243) aux objets comprend l'entrée manuelle de références à des informations textuelles associées à un objet, en utilisant un procédé de glisser-lâcher.

13. Procédé selon l'une quelconque des revendications 1 à 12, dans lequel l'étape de l'affectation de propriétés à chaque objet (212-217) comprend l'affectation d'au moins un port d'entrée et d'au moins un port de sortie, pour fournir des liaisons (218, 218') à d'autres objets dans la base de données (104).

14. Procédé selon l'une quelconque des revendications 1 à 13, dans lequel la collecte de données concernant les objets (212-217) dans la base de données (104) comprend la collecte d'informations textuelles affectées aux objets dans la base de données.

15. Procédé selon l'une quelconque des revendications 1 à 14, dans lequel au moins un objet représente un composant physique dans le système de commande de bâtiment.

16. Procédé selon l'une quelconque des revendications 1 à 15, dans lequel au moins un objet représente un composant logiciel dans le système de commande de bâtiment.

17. Procédé selon l'une quelconque des revendications 1 à 16, dans lequel au moins un objet représente un système comprenant au moins deux objets formant des contenus dans la base de données.

18. Programme informatique, comprenant des instructions logicielles qui, lorsqu'elles sont exécutées dans un ordinateur (105), effectuent un procédé selon l'une quelconque des revendications 1 à 17.

19. Moyens informatiques configurés pour exécuter un procédé selon l'une quelconque des revendications 1 à 17.
